# EUROPÄISCHE PATENTSCHRIFT

(11) **EP 2 313 289 B1**
(45) Veröffentlichungstag und Bekanntmachung des Hinweises auf die Patenterteilung: **23.11.2016**
(21) Anmeldenummer: 09777919.3
(22) Anmeldetag: 17.08.2009
(51) Int. Cl.: B60N 2/02, B64D 11/06, A47C 7/36

(54) **SITZ, INSBESONDERE FLUGZEUGSITZ**
SEAT, PARTICULARLY AIRPLANE SEAT
SIÈGE, EN PARTICULIER SIÈGE D'AVION

(30) Priorität: 22.08.2008 DE 102008039263
(43) Veröffentlichungstag der Anmeldung: 27.04.2011
(73) Patentinhaber: Zim Gmbh, 88677 Markdorf (DE)
(72) Erfinder: ISELE, Frank, 88263 Horgenzell (DE); GRUENBERG, Juergen, 88214 Ravensburg (DE); SOETEBIER, Ulf, 88046 Friedrichshafen (DE); ZIMMERMANN, Peter, 88677 Markdorf (DE)
(74) Vertreter: Otten, Roth, Dobler & Partner mbB Patentanwälte
(86) Internationale Anmeldenummer: PCT/EP2009/005948
(87) Internationale Veröffentlichungsnummer: WO 2010/020386

(56) Entgegenhaltungen:
- DE-A1- 2 134 746
- DE-A1- 3 335 463
- FR-A- 2 586 915

## Beschreibung

Die Erfindung betrifft einen Sitz, insbesondere Flugzeugsitz, mit einer starren Sitzstruktur und einer schwenkbaren Rückenlehne, die mit der Sitzstruktur über ein Dämpferelement verbunden ist.

### STAND DER TECHNIK

Sitze, insbesondere Flugzeugsitze, sind in vielfältiger Form und Ausführung bekannt und auf dem Markt. An ihre Ausgestaltung und den bietenden Komfort werden zwischenzeitlich hohe Anforderungen gestellt. Dazu gehört beispielsweise, dass derartige Sitze in ihrer Sitzbreite verstellbar sind, damit unterschiedlichen Anforderungen des Fluggastes Rechnung getragen werden kann. So ist beispielsweise aus dem Deutschen Gebrauchsmuster DE 76 28 789 eine Fluggastsitzreihe mit Einzelrückenlehnen und seitlich durch Sitzteiler begrenzte Seitenteile bekannt, die von einem gemeinsamen Sitzgestell getragen werden, das wenigstens zwei parallel zueinander und in Sitzquerrichtung verlaufende, als Rohre ausgebildete Holme aufweist, mit denen Füsse fest und zumindest ein Teil der Sitzteiler in Holmlängsrichtung verstellbar verbunden sind.

Vor allem wird dieses Problem aber gelöst durch die DE 10 2008 022 671.8, bei der die Sitzteiler in Richtung der Holme verstellbar sind, so dass eine sehr leichte und einfache Verstellung der Sitzbreite möglich ist.

Nicht nur damit, sondern auch allgemein taucht ein weiteres Problem auf, was vor allem die Verstellbarkeit der Rückenlehne anbelangt. Die Rückenlehne muss in ihrer Neigung verstellbar sein und zwar bevorzugt zwischen einer aufrechten Sitzposition und einer geneigten Ruheposition. Stellungen dazwischen sind auch möglich und vor allem durch ein Feder-Dämpfer-Element gewährleistet, welches allgemein als Hydrolock bezeichnet wird. Es besteht meist aus einem Kraftspeicher, in welchem sich ein Kolben zwischen zwei Räumen bewegt, die mit einem Medium gefüllt sind. Durch das Bewegen des Kolbens wird das Medium durch verengte Bohrung im Kolben von einem Raum in den anderen verlagert, wodurch eine Bewegungsgeschwindigkeit der Rückenlehne stark gedämpft wird. Dieses Dämpferelement ist üblicherweise einerseits über einen Gelenkbolzen mit einem Rückenlehnenhebel verbunden, während andererseits aus ihm ein stangenförmiges Verbindungselement herausragt, welches in dem Dämpferelement mit dem Kolben verbunden ist. Dieses als Gewindestange ausgebildete Verbindungselement durchgreift dann ein Durchgangsloch in einem Stehbolzen, der wiederum in einem Durchgangsloch in einem Sitzteiler angeordnet ist. Der Stehbolzen ist in dem Sitzteiler mittels eines Fixierbolzens befestigt, wobei allerdings durch das Durchgangsloch bereits eine Schwächung des Sitzteilers stattfindet. In dem Durchgangsloch des Stehbolzens ist die Gewindestange dann mittels zweier Muttern festgelegt.

Somit stellt der Hydrolock eine Verbindung der beweglichen Rückenlehne zum starren Sitzgestell her. Er sorgt für eine meist stufenlose Arretierung der Lehne in einem vorgegebenen Winkelbereich. Die Anbindung des Hydrolocks wird gekennzeichnet durch ein sehr hohes Lastniveau und eine hohe Anzahl von Beanspruchungszyklen. Dadurch ist eine solche Anbindung hinsichtlich der Lebensdauer empfindlich wegen der Gefahr der Rissbildung.

Außerdem sind die Exzentrizitäten von Lastpfaden (z.B. gekröpfte Hebel) zu beachten. Hier entstehen Biegemomente, die vom Hydrolock aufgenommen und in die Sitzteilerstruktur abgeleitet werden müssen. Diese Zwangsbiegung wird zudem überlagert, wenn bei einer Rückenlehnenbewegung ebenfalls Zwangsbiegung auf den Hydrolock entsteht. Wird keine geeignete Lagerung des Hydrolocks berücksichtigt, entstehen sich überlagernde Zwangskräfte, die zu Ermüdungsrissen im Hydrolock und in der Lagerungsstruktur führen können. Die grundsätzliche Verwendung von Dämpfungselementen an Sitzstrukturen ist aus den Dokumenten DE 33 35 463 A1, FR-A-2586915 sowie DE 21 34 746 A1 bekannt.

### AUFGABE

Aufgabe der vorliegenden Erfindung ist es, die Anbindung des Dämpfungselementes an die starre Sitzstruktur und/oder die Rückenlehne wesentlich zu verbessern und sicherer zu gestalten.

### LÖSUNG DER AUFGABE

Zur Lösung der Aufgabe führt zum einen, dass das Dämpferelement mit der Sitzstruktur über ein Gelenk verbunden ist.

Das bedeutet, dass sich das Dämpferelement bzw. das aus dem Dämpferelement herausgeführte Befestigungselement in einem weitew Wintelbereicn und möglichst allseitig bewegen kann, so dass es zu einer wesentlichen Verminderung oder Vermeidung der Zwangskräfte kommt.

Ein zweiter Erfindungsgedanke bezieht sich darauf, dass die Verbindung von Dämpferelement mit Sitzstruktur über einen Beschlag erfolgt, welcher einerseits an die Sitzstruktur anschlägt und andererseits zur Aufnahme eines Verbindungselementes des Dämpferelementes geeignet ist. Das bedeutet, dass der Beschlag, der den bekannten Stehbolzen ersetzt, nicht mehr in eine Ausnehmung in dem Sitzteiler oder einem sonstigen Teil der starren Sitzstruktur eingreift, so dass in diesem Bereich keine Schwächung der Sitzstruktur erfolgen muss. Ferner ist es möglich, die Lagerung des Verbindungselementes des Dämpferelementes in dem Beschlag so zu variieren, dass der Lastpfad möglichst in einer Ebene verläuft, so dass keine Zusatzbiegung entsteht.

### Beide

Massnahmen zusammen bewirken zum einen, dass der Lastpfad, wie oben erwähnt, in einer Ebene verläuft und somit keine Zusatzbiegungen entstehen, und zum anderen aber auch, dass die Bewegung des Dämpfungselementes bzw. Verbindungselementes selber durch ein Pendellager aufgenommen wird, was eine zwangsbiegungsfreie Lagerung zulässt und lediglich die Übertragung von Zug- und Druckkräften über einen Beschlag in den Sitzteiler gewährleistet. Damit sind Ermüdungsbrüche, die aus Zwangskräften entstehen sowohl im Dämpferelement bzw. Verbindungselement selbst, als auch im Sitzteiler ausgeschlossen.

In einem bevorzugten Ausführungsbeispiel ist der Beschlag als Aufnahmegabel ausgebildet, wobei ein oberer Rahmen mit einem unteren Rahmen über ein Rückenteil miteinander verbunden sind. Dieses Rückenteil liegt bevorzugt der Sitzstruktur flächig bzw. plan an, so dass sich eine grossflächige Kraftverteilung ohne Schwächung der Sitzstruktur ergibt.

Zwischen dem oberen und dem unteren Rahmen befindet sich ein Lagerblock zur Lagerung des Verbindungselementes. Der Aufbau des Lagerblocks weist einen inneren und einen äusseren Rahmen auf, wobei der äussere Rahmen lösbar am inneren Rahmen festgelegt ist. Innerer und äusserer Rahmen dienen zusammen zur Festlegung eines Lagerkäfigs für eine Lagerschale, welche eine Pendelbewegung des Verbindungselementes ermöglicht. Hierzu ist im inneren Rahmen eine Anschlagsschulter ausgebildet, gegen welche der Lagerkäfig durch den äusseren Rahmen gedrückt wird.

Zur Ausbildung des Pendellagers bzw. der allseitigen Beweglichkeit des Verbindungselementes besitzt die Lagerschale eine ballige Aussenkontur, die in einer kalottenförmigen Innenkontur in dem Lagerblock allseits dreht.

Die Lagerschale kann ein- oder mehrteilig ausgebildet sein.

Ferner soll denkbar sein, dass das Verbindungselement, ggf. mit Lagerkäfig und Lagerschale, von der Seite her zwischen den oberen und unteren Rahmen des Beschlags eingeschwenkt werden kann. All dies verbessert die Montagemöglichkeit und verringert den Aufwand. Beispielsweise ist es auch möglich, dass das Pendellager nach dem Einschieben von der Seite her mittels einer Befestigungsplatte verschlossen wird, die das Pendellager in seiner Position hält.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Seitenansicht eines Ausschnitts aus einem Flugzeugsitz;
Figur 2 eine schematische Draufsicht auf den Ausschnitt gemäss Figur 1;
Figur 3 eine Seitenansicht eines efindungsgemässen Beschlags zur Verbindung zwischen einem Dämpferelement und einer Sitzstruktur;
Figur 4 einen Querschnitt durch den Beschlag gemäss Figur 3 entlang Linie A-A.

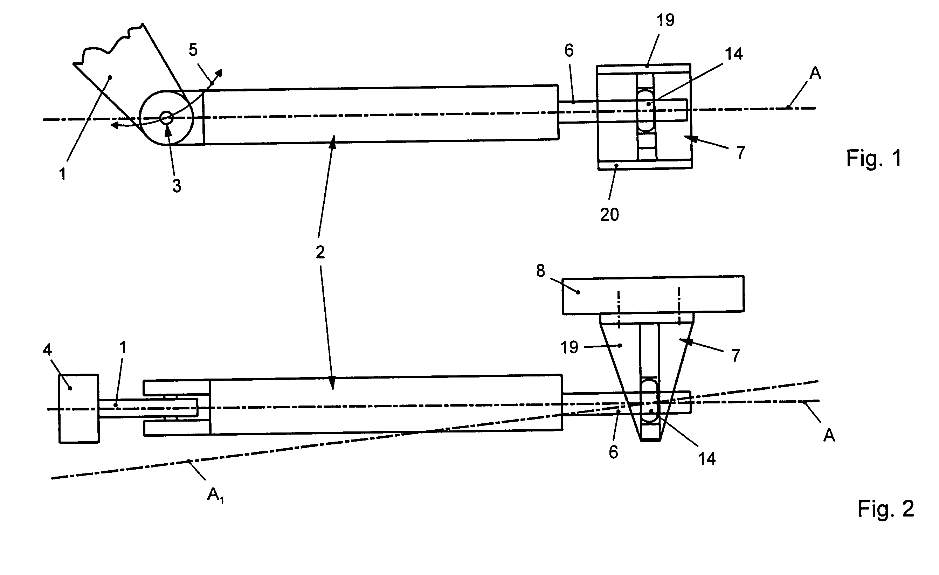

Von einem erfindungsgemässen Sitz, insbesondere Flugzeugsitz, ist in Figur 1 und 2 ein Rückenlehnenhebel 1 angedeutet, der mit einem Dämpferelement 2 über einen Gelenkbolzen 3 verbunden ist. Um den Gelenkbolzen 3 kann der Rückenlehnenhebel 1 und damit eine Rückenlehne 4, von der in Figur 2 nur ein geringer Teil dargestellt ist, entlang dem Doppelpfeil 5 geschwenkt werden.

Das Dämpferelement 2 wird von einer Längsachse A durchzogen, die auch durch den Gelenkbolzen 3 verläuft. In Figur 2 ist erkennbar, dass die Längsachse A ebenfalls entlang einem Verbindungselement 6 und entlang einer Ebene des Rückenlehnenhebels 1 verläuft.

Das Verbindungselement 6 kann beispielsweise als Gewindestange ausgebildet sein. Es ist an einen Beschlag 7 angekoppelt, der das Dämpferelement 2 und das Verbindungselement 6 mit einer starren Sitzstruktur 8 verbindet. Auch von dieser Sitzstruktur 8 ist nur schematisch ein Teilbereich angedeutet. Bei der Sitzstruktur 8 kann es sich beispielsweise um einen Sitzteiler eines Flugzeugsitzes handeln, wie er in der DE 10 2008 022 671.8 gezeigt ist. Dort ist auch angegeben, dass der Sitzteiler entlang eines waagrechten Holms verschoben werden kann, um eine unterschiedliche Sitzbreite einzustellen. Geschieht dies, so verläuft die Längsachse A nicht mehr wie oben beschrieben, sondern als Längsachse A1, wie in Figur 2 angedeutet.

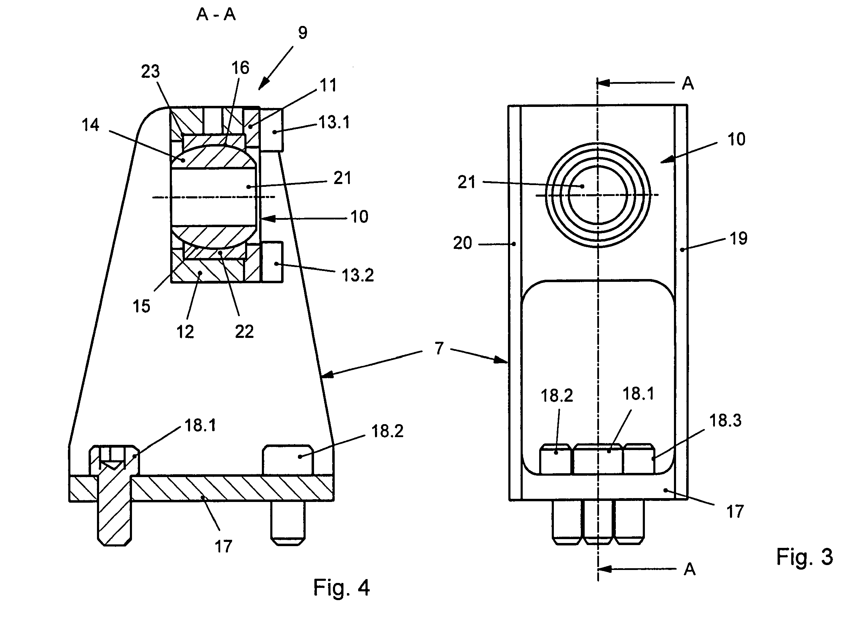

Wesentlich im vorliegenden Fall ist, dass in dem Beschlag 7 gemäss den Figuren 3 und 4 ein Pendellager 9 ausgebildet ist. Hierzu ist ein Lagerblock 10 vorgesehen, der aus einem äusseren Rahmen 11 und einem inneren Rahmen 12 zusammengesetzt ist. Beide Rahmen sind über Befestigungselemente 13.1 und 13.2 miteinander verbunden.

Zwischen dem äusseren Rahmen 11 und dem inneren Rahmen 12 ist ein ggf. auch mehrteilig ausgebildeter Lagerkäfig 22 mit Lagerschale 14 angeordnet, deren Aussenkontur 15 ballig ausgebildet ist. Diese ballige Aussenkontur 15 wirkt mit einer kalottenförmigen Innenkontur 16 des Lagerkäfigs 22 zusammen, so dass sich die Lagerschale 14 allseits drehen kann. Der äussere Rahmen 11 drückt den Lagerkäfig 22 gegen eine Anschlagschulter 23 des inneren Rahmens 12.

Die Funktionsweise der vorliegenden Erfindung ist folgende:
Der Beschlag 7 ist mit einem Rückenteil 17 über Befestigungselement 18.1 bis 18.3 mit der starren Sitzstruktur 8 verbunden. Dabei bilden ein oberer Rahmen 19 und ein unterer Rahmen 20 zusammen mit dem Rückenteil 17 eine gabelförmige Aufnahme für den Lagerblock 10. Dieser kann auf beliebige Art und Weise, lösbar oder nicht lösbar, einteilig oder mehrteilig, zwischen den oberen Rahmen 19 und den unteren Rahmen 20 eingesetzt sein. Zumindest gilt dies für den inneren Rahmen 12, wobei die Lagerschale 14 nach ihrem Einsetzen in den inneren Rahmen 12 durch den äusseren Rahmen 11 in ihrer Gelenkposition festgelegt wird.

Vom Dämpferelement 2 wird nun das Verbindungselement 6 durch einen Durchlass 21 in der Lagerschale 14 gesteckt, wobei die Durchstecktiefe durch entsprechende, bevorzugt beidseitig angeordnete Muttern bestimmt werden kann.

Das Pendellager 9 ermöglicht nun ein Versatz der Sitzstruktur 8 bzw. des Beschlags 7 gegenüber dem Rückenlehnenhebel 1 in beträchtlichem Umfang, so dass die Längsachse A in einen Verlauf der Längsachse A1 oder auch dazwischen ausweichen kann.

## Patentansprüche

1. Sitz, insbesondere Flugzeugsitz, mit einer starren Sitzstruktur (8) und einer schwenkbaren Rückenlehne (4), die mit der Sitzstruktur (8) über ein Dämpferelement (2) verbunden ist, wobei die Verbindung von Dämpferelement (2) mit Sitzstruktur (8) über einen Beschlag (7) erfolgt, welcher einerseits an der Sitzstruktur (8) anschlägt und andererseits der Aufnahme eines Verbindungselementes (6) des Dämpferelementes (2) dient, **dadurch gekennzeichnet, dass** für eine Ausbildung eines allseitig beweglichen Pendellagers (9) eines Verbindungselements des Dämpferelements ein Lagerblock (10) zur Festlegung eines Lagerkäfigs für eine Lagerschale (14) vorgesehen ist, mit einem Lagerkäfig (22) und einer Lagerschale (14), der
Lagerblock (10) aus einem inneren und einem äußeren Rahmen (12, 11 ) besteht und wobei der äußere Rahmen (11) am inneren Rahmen (12) lösbar festgelegt ist.

2. Sitz nach Anspruch 1, **dadurch gekennzeichnet, dass** der Beschlag (7) eine Aufnahmegabel ausbildet, wobei ein oberer Rahmen (19) mit einem unteren Rahmen (20) über ein Rückenteil (17) miteinander verbunden sind, dass das Rückenteil (17) zumindest teilweise plan an der Sitzstruktur anliegt und mit dieser über Befestigungselemente (18.1 - 18.3) verbunden ist.

3. Sitz nach Anspruch 2, **dadurch gekennzeichnet, dass** zwischen dem oberen und dem unteren Rahmen (19, 20) der Lagerblock (10) zur Lagerung eines Verbindungselementes (6) angeordnet ist.

4. Sitz nach einem der vorangegangenen Ansprüche, **dadurch gekennzeichnet, dass** der innere Rahmen eine Anschlagschulter (23) des Lagerkäfigs (22) für eine Lagerschale (14) ausbildet, der von dem äußeren Rahmen (11) gegen die Anschlagschulter (23) gedruckt wird.

5. Sitz nach einem der vorangegangenen Ansprüche, **dadurch gekennzeichnet, dass** die Lagerschale (14) einen Durchlass (21) zur Aufnahme des Verbindungselementes (6) aufweist.

6. Sitz nach einem der vorangegangenen Ansprüche, **dadurch gekennzeichnet, dass** das Pendellager (9) ein Gelenk ist.

7. Sitz nach einem der vorangegangenen Ansprüche, **dadurch gekennzeichnet, dass** die Lagerschale (14) eine ballige Außenkontur (15) aufweiset, die in einer kallottenförmigen Innenkontur (16) in dem Lagerkäfig (22) allseits dreht.

8. Sitz nach einem der vorangegangenen Ansprüche, **dadurch gekennzeichnet, dass** die Lagerschale (14) ein- oder mehrteilig ausgebildet ist.

9. Sitz nach wenigstens einem der Ansprüche 1 bis 8, **dadurch gekennzeichnet, dass** die gelenkige Verbindung zwischen Dämpferelement (2) und Rückenlehne (4) ebenfalls als Pendellager ausgebildet ist.

## Claims

1. Seat, in particular an aircraft seat, with a rigid seat structure (8) and a pivotable backrest (4), which is connected to the seat structure (8) by a damper element (2), wherein the damper element (2) is connected to the seat structure (8) by means of a fitting (7), which on the one hand is in contact with the seat structure (8) and on the other hand is used for housing a connecting element (6) of the damper element (2), **characterised in that** for forming a multi-directional movable self-aligning bearing (9) of a connecting element of the damper element a bearing block (10) is provided for securing a bearing cage for a bearing shell (14), with a bearing cage (22) and a bearing shell (14), the bearing block (10) consisting of an inner and an outer frame (12, 11) and wherein the outer frame (11) is secured detachably onto the inner frame.

2. Seat according to claim 1, **characterised in that** the fitting (7) forms a mounting fork, wherein an upper frame (19) is connected to a lower frame (20) by means of a back part (17), **in that** the back part (17) sits at least partly in a planar manner on the seat structure and is connected to the latter by means of securing elements (18.1 - 18.3).

3. Seat according to claim 2, **characterised in that** the bearing block (10) for supporting a connecting element (6) is arranged between the upper and the lower frame (19, 20).

4. Seat according to any one of the preceding claims, **characterised in that** the inner frame forms a stop shoulder (23) of the bearing cage (22) for a bearing shell (14), which is pushed from the outer frame (11) against the stop shoulder (23).

5. Seat according to any one of the preceding claims, **characterised in that** the bearing shell (14) comprises a passage (21) for receiving the connecting element (6).

6. Seat according to any one of the preceding claims, **characterised in that** the self-aligning bearing (9) is a hinge.

7. Seat according to any one of the preceding claims, **characterised in that** the bearing shell (14) has a crowned outer contour (15) which rotates in multiple directions in a spherical inner contour (16) in the bearing cage (22).

8. Seat according to any one of the preceding claims, **characterised in that** the bearing shell (14) is designed in one piece or as multiple parts.

9. Seat according to at least one of claims 1 to 8, **characterised in that** the joint connection between the damper element (2) and backrest (4) is also designed as a self-aligning bearing.

## Revendications

1. Siège, en particulier des sièges d'avion, avec une structure de siège rigide (8) et un dossier pivotant (4) qui est relié à la structure du siège (8) par l'intermédiaire d'un élément amortisseur (2), la liaison de l'élément d'amortissement (2) à la structure de siège (8) étant réalisée par l'intermédiaire d'une armature (7) qui, d'une part, vient en appui contre la structure de siège (8) et qui, d'autre part, sert à recevoir un élément de liaison (6) de l'élément amortisseur (2), **caractérisé en ce que** pour former un palier oscillant (9) pouvant bouger dans tous les sens pour un élément de liaison de l'élément d'amortissement, il est prévu un bloc-palier (10) pour la fixation d'une cage de palier pour une coquille de coussinet (14), avec une cage de palier (22) et une coquille de coussinet (14), le bloc-palier (10) se composant d'une cadre intérieur et d'un cadre extérieur (12, 11), et le cadre extérieur (11) étant fixé de façon détachable sur le cadre intérieur (12).

2. Siège selon la revendication 1, **caractérisé en ce que** l'armature (7) forme une fourche de réception, un cadre supérieur (19) étant relié à un cadre inférieur (20) par l'intermédiaire d'une pièce dorsale (17), **en ce que** la pièce dorsale (17) repose au moins partiellement à plat sur la structure de siège et est reliée à celle-ci par l'intermédiaire d'éléments de fixation (18.1 - 18.3).

3. Siège selon la revendication 2, **caractérisé en ce que** le bloc-palier destiné au logement d'un élément de liaison (6) est disposé entre le cadre supérieur et le cadre inférieur (19, 20).

4. Siège selon l'une des revendications précédentes, **caractérisé en ce que** le cadre intérieur forme un épaulement de butée (23) de la cage de palier (22) pour une coquille de coussinet (14), laquelle cage est pressée par le cadre extérieur (11) contre l'épaulement de butée (23).

5. Siège selon l'une des revendications précédentes, **caractérisé en ce que** la coquille de coussinet (14) présente un passage (21) pour recevoir l'élément de liaison (6).

6. Siège selon l'une des revendications précédentes, **caractérisé en ce que** le palier oscillant (9) est une articulation.

7. Siège selon l'une des revendications précédentes, **caractérisé en ce que** la coquille de coussinet (14) présente un contour extérieur (15) convexe qui tourne dans tous les sens dans un contour intérieur (16) en forme de calotte situé dans la cage de palier (22).

8. Siège selon l'une des revendications précédentes, **caractérisé en ce que** la coquille de coussinet (14) est formée en une ou plusieurs parties.

9. Siège selon l'une au moins des revendications 1 à 8, **caractérisé en ce que** la liaison articulée entre l'élément d'amortissement (2) et le dossier (4) est également conçu comme un palier oscillant.
